# EUROPÄISCHE PATENTSCHRIFT

(11) **EP 1 767 135 B1**
(45) Veröffentlichungstag und Bekanntmachung des Hinweises auf die Patenterteilung: **15.12.2010**
(21) Anmeldenummer: 06016684.0
(22) Anmeldetag: 10.08.2006
(51) Int. Cl.: A47L 15/42, A47L 15/23

(54) **Haushaltegerät mit Wasser führender Umschaltvorrichtung**
Dishwasher with a water distributing device
Lave-vaisselle avec dispositif de distribution de l'eau.

(30) Priorität: 12.01.2006 CH 502006
(43) Veröffentlichungstag der Anmeldung: 28.03.2007
(73) Patentinhaber: V-Zug AG, CH-6301 Zug (CH)
(72) Erfinder: Honegger, Adrian, CH-6004 Luzern (CH)
(74) Vertreter: Sutter, Kurt

(56) Entgegenhaltungen:
- DE-C- 959 822
- FR-A3- 2 431 278

## Beschreibung

Die Erfindung betrifft ein Haushaltgerät mit Wasser führender Umschaltvorrichtung gemäss Oberbegriff von Anspruch 1. Insbesondere betrifft die Erfindung einen entsprechend ausgestalteten Geschirrspüler.

Im Wasserkreislauf eines Geschirrspülers sind in der Regel ein oder mehrere Ventile angeordnet, welche den Lauf des Spülwassers steuern. Insbesondere werden bei teureren Modellen Ventile zwischen der Pumpe und den Sprüharmen eingesetzt, um das Wasser gezielt zu einem oder zu beiden Sprüharmen zu leiten. Zu diesem Zweck werden z.B. elektromagnetisch gesteuerte Klappen oder Kugelventile eingesetzt. Auch bei anderen Haushaltgeräten, z.B. bei Waschmaschinen, werden entsprechende Ventilsysteme benötigt. Es werden also Umschaltvorrichtungen benötigt, mit welchen Wasser wahlweise von einer dritten in eine erste oder eine zweite Leitung eingespeist werden kann. Eine solche Vorrichtung ist in der FR-A3-2431278 offenbart.

Die bekannten Ventilsysteme besitzen jedoch verschiedene Nachteile. Insbesondere sind sie störanfällig, sie können verschmutzen, sie können zu Leckagen führen, und sie erzeugen einen relativ starken Strömungswiderstand.

Es ist deshalb Aufgabe der vorliegenden Erfindung, ein Haushaltgerät der eingangs genannten Art bereitzustellen, das ein möglichst zuverlässiges, einfaches Ventil aufweist.

Diese Aufgabe wird vom Haushaltgerät gemäss Anspruch 1 erfüllt. Demgemäss besitzt die Umschaltvorrichtung also einen Eingangsabschnitt mit einer ersten und einer zweiten Kammer. Die erste Kammer ist mit der ersten Leitung verbunden und die zweite Kammer mit der zweiten Leitung. Die dritte Leitung ist als Schlauch ausgestaltet und mündet in den Eingangsabschnitt. Weiter sind Antriebsmittel vorgesehen, mit denen der Schlauch relativ zum Eingangsabschnitt zumindest in eine erste und eine zweite Stellung gebracht werden kann. Die ganze Anordnung ist dabei so ausgestaltet, dass das Verhältnis der Strömungswiderstände vom Schlauch in die erste und in die zweite Kammer abhängig von der jeweiligen Stellung des Schlauchs ist. Auf diese Weise kann, je nach Stellung des Schlauchs, das Verhältnis der Flussgeschwindigkeiten in der ersten und der zweiten Leitung geändert werden. Im Extremfall kann z.B. eine der beiden Leitungen geschlossen werden.

Durch die anspruchsgemässe Ausgestaltung wird ein System bereitgestellt, welches mechanisch einfach ist und deshalb hohe Zuverlässigkeit aufweist. Es ist besonders dazu geeignet, um die durch die beiden Sprüharme eines Geschirrspülers fliessenden Wassermengen einzustellen.

Weitere bevorzugte Ausführungen der Erfindung ergeben sich aus den abhängigen Ansprüchen sowie aus der nun folgenden Beschreibung anhand der Figuren. Dabei zeigen:
Fig. 1 einen Schnitt durch eine Ausführung eines erfindungsgemässen Geschirrspülers,
Fig. 2 einen Schnitt durch die Umschaltvorrichtung in Mittelstellung,
Fig. 3 einen Schnitt durch die Umschaltvorrichtung in einer ersten ausgelenkten Stellung
Fig. 4 einen Schnitt durch die Umschaltvorrichtung in einer zweiten ausgelenkten Stellung.

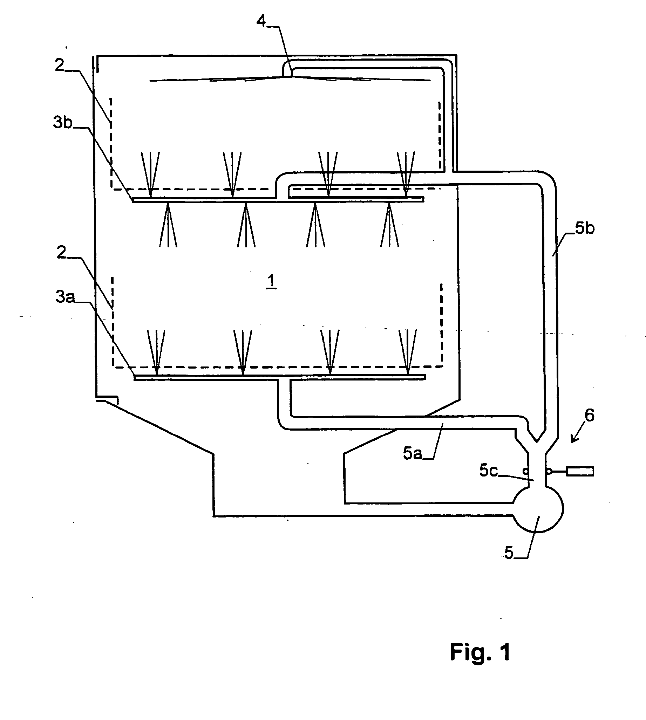

In Fig. 1 ist ein Geschirrspüler mit einem Nutzraum 1 dargestellt, in welchem beispielsweise zwei Geschirrkörbe 2 angeordnet sind. Zur Beaufschlagung des Spülguts mit Wasser sind in an sich bekannter Weise zwei drehbare Sprüharme 3a, 3b vorgesehen, sowie ein Sprinkler 4 an der Decke des Nutzraums 1. Eine Pumpe 5 dient dazu, das Wasser aus dem unteren Teil des Nutzraums 1 abzusaugen und über Leitungen 5a, 5b zu den Sprüharmen 3a, 3b und zum Sprinkler 4 zu pumpen. Zwischen der Pumpe 5 und Sprüharmen 3a, 3b ist eine Umschaltvorrichtung 6 angeordnet, mit der das Verhältnis der den beiden Sprüharmen 3a, 3b zuzuführenden Wassermenge eingestellt werden kann.

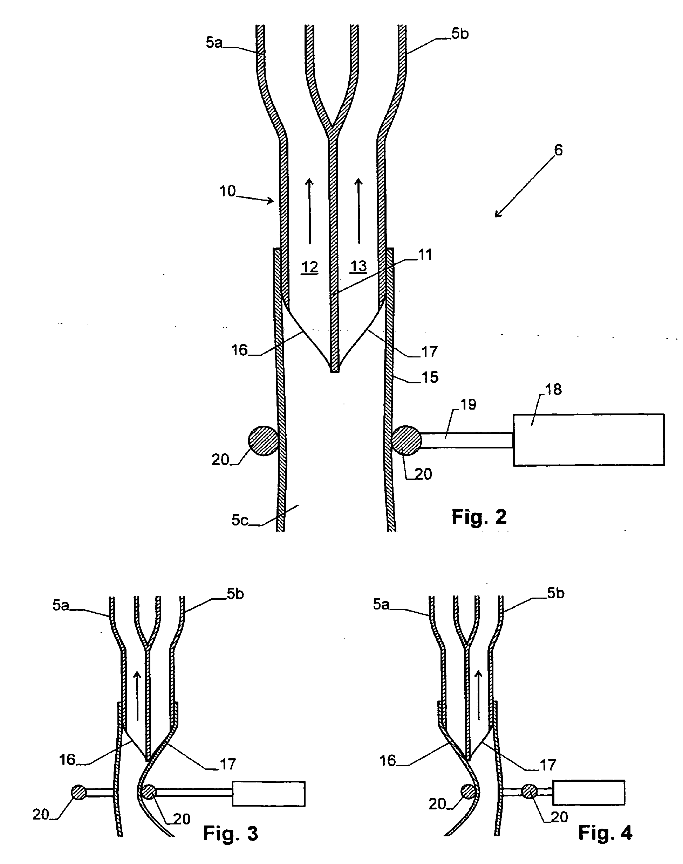

Die Umschaltvorrichtung 6 ist in Fig. 2 - 4 dargestellt. Sie besitzt einen Eingangsabschnitt 10, welcher aus einem formstabilen, z.B. zylindrischen Bauteil besteht. Eine Trennwand 11 unterteilt den Eingangabschnitt 10 in zwei Kammern 12, 13. Die erste Kammer 12 ist über eine erste Leitung 5a mit dem unteren Sprüharm 3a verbunden, die zweite Kammer 13 über eine zweite Leitung 5b mit dem oberen Sprüharm 3b.

Ein flexibler Schlauch 15 bildet Teil einer dritten Leitung 5c, die die Pumpe 5 mit der Umschaltvorrichtung 6 verbindet. Der Schlauch 15 ist um den Eingangsabschnitt 10 gelegt und dort in geeigneter Weise wasserdicht befestigt. Der Eingangsabschnitt 10 besitzt zwei Öffnungen 16, 17, welche das Innere des Schlauches 15 mit den Kammern 12 bzw. 13 verbinden.

Die Seitenränder der Öffnungen 16, 17 verlaufen schräg zur Trennwand, und zwar derart, dass der Eingangsabschnitt 10 an seinem den Leitungen 5a, 5b entgegen gesetzten Ende spitz zuläuft, was ein vollständiges Verschliessen der Öffnungen 16, 17 durch den Schlauch 15 in der unten beschriebenen Weise erleichtert.

Die Umschaltvorrichtung 6 ist mit Antriebsmitteln in Form eines linearen Antriebs 18 ausgestattet. Der Antrieb wird von der Steuerung des Geräts automatisch entsprechend Vorgaben eines Waschprogramms angesteuert. Der lineare Antrieb 18 ist über eine Verbindungsstange 19 mit zwei Antriebsbacken 20 verbunden, zwischen denen der Schlauch 15 verläuft. Der gegenseitige Abstand der Antriebsbacken 20 entspricht etwa dem Durchmesser des Schlauchs 15. Die Antriebsbacken 20 sind in einem Abstand von z.B. einigen Zentimetern vom schlauchseitigen Ende des Eingangsabschnitts 10 angeordnet.

Die Antriebsbacken 20 können vom linearen Antrieb 18 in der Richtung senkrecht zur Trennwand 11 als Einheit bewegt werden, vgl. Fig. 3 und 4. In der vorliegenden Ausführung können die Haltebacken 20 in drei unterschiedliche Positionen gebracht werden:
- In der Mitteilposition, die in Fig. 2 dargestellt ist, ist der Schlauch 15 im Wesentlichen spiegelsymmetrisch zur Trennwand 4 angeordnet. In diesem Fall ist der Flusswiderstand für das von der Pumpe 5 kommende Wasser durch beide Öffnungen 16 bzw. 17 ungefähr gleich gross, so dass sich das Wasser auf beide Kammern 12 bzw. 13 aufteilt.
- In der in Fig. 3 gezeigten ersten, ausgelenkten Position wird der Schlauch von den Antriebsbacken 20 seitlich so weit ausgelenkt, dass er im Wesentlichen auf dem Seitenrand der in Fig. 3 rechten, zweiten Öffnung 17 aufliegt und diese abdichtet. Gleichzeitig bleibt die linke, erste Öffnung 16 frei, so dass das Wasser primär durch die erste Öffnung 16 fliesst.
- In der in Fig. 4 gezeigten zweiten, ausgelenkten Position wird der Schlauch von den Antriebsbacken 20 seitlich so weit ausgelenkt, dass er im Wesentlichen auf dem Seitenrand der in Fig. 4 linken, ersten Öffnung 16 aufliegt und diese abdichtet. Gleichzeitig bleibt nun aber die rechte, zweite Öffnung 17 frei, so dass das Wasser primär durch die zweite Öffnung 17 fliesst.

Damit der Schlauch in den Stellungen nach Fig. 3 und 4 die jeweilig geschlossene Öffnung gut abdichtet, verlaufen die Seitenwände der Öffnungen (in einem Schnitt senkrecht zur Trennwand 11 gemäss der Situation gemäss Fig. 2) gekrümmt, und zwar derart, dass sie dem gekrümmten Verlauf des ausgelenkten Schlauches 15 ungefähr folgen.

Denkbar ist es auch, nur eine Antriebsbacke 20 zu verwenden, insbesondere wenn nur eine der beiden Öffnungen 16 bzw. 17 vollständig geschlossen werden muss. In diesem Fall können z.B. nur die beiden Stellungen des Schlauches nach 2 und 4 erreicht werden, was es erlaubt, die erste Öffnung 16, nicht aber die zweite Öffnung 17 vollständig zu verschliessen.

Weiter ist es denkbar, den gleichen Geschirrspüler in einer funktionsreduzierten Variante ganz ohne Antrieb 18 und Antriebsbacken 20 einzusetzen. In diesem Falle ist keine gezielte Auswahl der Wasserverteilung zwischen den beiden Leitungen 5a, 5b möglich. Somit kann das gleiche Gerät ohne grosse apparative Änderungen in einer Variante mit Umschaltung und in einer Variante ohne Umschaltung angeboten werden.

In der Ausführung nach Fig. 2 wird der Schlauch 15 mit den Antriebsbacken 20 hin- und herbewegt. In einer alternativen Variante kann der Schlauch 15 auch stationär angeordnet sein, während der Eingangsabschnitt 10 beweglich ausgeführt ist und die Leitungen 5a, 5b bzw. auch als flexible Schläuche ausgeführt sind. In diesem Fall kann der Antrieb den Eingangsabschnitt 10 hin- und herbewegen, während der Schlauch 15 fest zwischen den in diesem Fall stationären Backen 20 gehalten wird.

Nebst den in Fig. 3 und 4 gezeigten, vollständig ausgelenkten Stellungen sind auch Zwischenstellungen möglich, bei denen der Schlauch zwar auf eine Seite ausgelenkt wird, nicht aber so weit, dass er die gegenüber liegende Öffnung vollständig schliesst.

Wie bereits erwähnt, kann die vorliegende Erfindung in Geschirrspülern, aber auch anderen, Wasser führenden Haushaltgeräten eingesetzt werden, wie z.B. Waschmaschinen oder Dampfgargeräten.

## Patentansprüche

1. Haushaltegerät mit mindestens einer ersten (5a), einer zweiten (5b) und einer dritten (5c) Wasser führenden Leitung, wobei weiter eine Wasser führende Umschaltvorrichtung (6) vorgesehen ist, mit welcher Wasser wahlweise von der dritten (5c) in die erste oder die zweite Leitung (5a, 5b) einspeisbar ist, **dadurch gekennzeichnet, dass** die Umschaltvorrichtung (6) einen Eingangsabschnitt (10) mit einer ersten und einer zweiten Kammer (12, 13) aufweist, wobei die dritte Leitung (5b) als Schlauch (15) ausgestaltet ist und in den Eingangsabschnitt (10) mündet, und dass weiter Antriebsmittel (18, 19, 20) vorgesehen sind, um den Schlauch (15) relativ zum Eingangsabschnitt (10) in mindestens eine erste und eine zweite Stellung zu bringen, wodurch das Verhältnis der Strömungswiderstände vom Schlauch in die erste und in die zweite Kammer (12, 13) änderbar ist.

2. Haushaltgerät nach Anspruch 1, wobei der Schlauch (15) um den Eingangsabschnitt (10) gelegt ist.

3. Haushaltgerät nach einem der vorangehenden Ansprüche, wobei im Eingangsabschnitt (10) Öffnungen (16, 17) zur ersten und zur zweiten Kammer (12, 13) angeordnet sind.

4. Haushaltgerät nach Anspruch 3, wobei im Eingangsabschnitt (10) eine Trennwand (11) angeordnet ist, welche die beiden Kammern (12, 13) trennt, und wobei ein Seitenrand mindestens einer der Öffnungen (16, 17) schräg zur Trennwand verläuft.

5. Haushaltgerät nach Anspruch 4, wobei der Seitenrand in einem Schnitt durch den Eingangsabschnitt (10) senkrecht zur Trennwand (11) einen gekrümmten Verlauf aufweist.

6. Haushaltgerät nach einem der Ansprüche 4 oder 5, wobei der Schlauch (15) in einer der Stellungen im Wesentlichen auf dem Seitenrand aufliegt und die entsprechende Öffnung abdichtet.

7. Haushaltgerät nach einem der Ansprüche 4 bis 6, wobei der Schlauch (15) mit den Antriebsmitteln (6) senkrecht zur Trennwand bewegbar ist.

8. Haushaltgerät nach einem der vorangehenden Ansprüche, wobei die Antriebsmittel (6) einen linearen Antriebs (18) aufweisen.

9. Haushaltgerät nach einem der vorangehenden Ansprüche, wobei die Antriebsmittel (18, 19, 20) mindestens eine Antriebsbacke (20) umfassen, welche seitlich gegen den Schlauch (15) bewegbar ist.

10. Haushaltgerät nach Anspruch 9, wobei die Antriebsmittel (18, 19, 20) zwei Antriebsbacken (20) umfassen, zwischen denen der Schlauch (15) angeordnet ist.

11. Haushaltgerät nach einem der Ansprüche 9 oder 10, wobei die Antriebsbacke bzw. Antriebsbacken (20) mit einem Antrieb (18) gekoppelt und von diesem bewegbar ist bzw. sind.

12. Haushaltgerät nach einem der vorangehenden Ansprüche, wobei das Haushaltgerät als Geschirrspüler ausgestaltet ist und mindestens einen ersten und einen zweiten Sprüharm (3a, 3b) aufweist, wobei mit der Umschaltvorrichtung (6) ein Verhältnis der den beiden Sprüharmen (3a, 3b) zuzuführenden Wassermenge änderbar ist.

## Claims

1. Household apparatus with at least a first (5a), a second (5b) and a third (5c) water conducting pipe, wherein furthermore a water conducting switching device (6) is provided, by means of which water can selectively be fed from the third (5c) into the first or the second pipe (5a, 5b), **characterized in that** the switching device (6) has an entry area (10) with a first and a second chamber (12, 13), wherein the third pipe (5c) is formed as a hose (15) and flows into the entry area (10), and **in that** furthermore actuating means (18, 19, 20) are provided in order to bring the hose (15) in at least a first and a second position relatively to the entry area (10), resulting **in that** the rate of the flow resistances of the hose in the first and in the second chamber (12, 13) is changeable.

2. Household apparatus according to claim 1, wherein the hose (15) is disposed around the entry area (10).

3. Household apparatus according to one of the preceding claims, wherein openings (16, 17) to the first and the second chamber (12, 13) are arranged in the entry area (10).

4. Household apparatus according to claim 3, wherein a separation wall (11) which separates the two chambers (12, 13) is arranged in the entry area (10) and wherein a side margin of at least one of the openings (16, 17) runs obliquely with respect to the separation wall.

5. Household apparatus according to claim 4, wherein the side margin has a curved path in a section through the entry area (10) which is perpendicular to the separation wall.

6. Household apparatus according to one of the claims 4 or 5, wherein the hose (15) lies, in one of the positions, substantially on the side margin and seals the respective opening.

7. Household apparatus according to one of the claims 4 to 6, wherein the hose (15) is movable perpendicularly to the separation wall with the actuating means.

8. Household apparatus according to one of the preceding claims, wherein the actuating means (6) have a linear actuator (18).

9. Household apparatus according to one of the preceding claims, wherein the actuating means (18, 19, 20) comprise at least a driving shoe (20) which is movable sideways against the hose (15).

10. Household apparatus according to claim 9, wherein the actuating means (18, 19, 20) comprise two driving shoes (20), between which the hose (15) is arranged.

11. Household apparatus according to one of the claims 9 or 10, wherein the driving shoe or the driving shoes (20) respectively is or are respectively coupled to an actuator (18) and movable by it.

12. Household apparatus according to one of the preceding claims, wherein the household apparatus is formed as a dishwasher and has at least a first and a second spray arm (3a, 3b), wherein a ratio of the water amount to be supplied to both spray arms (3a, 3b) is changeable by means of the switching device (6).

## Revendications

1. Appareil ménager ayant au moins une première (5a), une deuxième (5b) et une troisième (5c) conduite d'eau, dans lequel est prévu en outre un dispositif de distribution d'eau (6) selon lequel l'eau peut s'écouler au choix de la troisième (5c) vers la première ou vers la deuxième conduite (5a, 5b), **caractérisé en ce que** le dispositif de distribution (6) présente une section d'entrée (10) avec une première et une deuxième chambre (12, 13), la troisième conduite (5c) étant réalisée sous forme de tuyau (15) et débouchant dans la section d'entrée (10) et **en ce que** sont prévus en outre des moyens d'entraînement (18, 19, 20) pour mettre le tuyau (15) dans au moins une première et une deuxième position par rapport à la section d'entrée (10) ce qui permet de modifier le rapport des résistances à l'écoulement du tuyau dans la première et dans la deuxième chambre (12, 13).

2. Appareil ménager selon la revendication 1, **caractérisé en ce que** le tuyau (15) est disposé autour de la section d'entrée (10).

3. Appareil ménager selon l'une quelconque des revendications précédentes, **caractérisé en ce que** des ouvertures (16, 17) sur la première et la deuxième chambre (12, 13) sont prévues dans la section d'entrée (10).

4. Appareil ménager selon la revendication 3, **caractérisé en ce qu'**une paroi de séparation (11) qui sépare les deux chambres (12, 13) est prévue dans la section d'entrée (10) et **en ce qu'**un bord latéral d'au moins une des ouvertures (16, 17) s'étend en biais par rapport à la paroi de séparation.

5. Appareil ménager selon la revendication 4, **caractérisé en ce que** le bord latéral présente selon une coupe de la section d'entrée (10) perpendiculaire à la paroi de séparation (11) une allure courbe.

6. Appareil ménager selon l'une quelconque des revendications 4 ou 5, **caractérisé en ce que** le tuyau (15) repose dans une des positions essentiellement sur le bord latéral et ferme hermétiquement l'ouverture correspondante.

7. Appareil ménager selon l'une quelconque des revendications 4 à 6, **caractérisé en ce que** le tuyau (15) peut être déplacé avec les moyens d'entraînement (6) perpendiculairement à la paroi de séparation.

8. Appareil ménager selon l'une quelconque des revendications précédentes, **caractérisé en ce que** les moyens d'entraînement (6) présentent un entraînement linéaire (18).

9. Appareil ménager selon l'une quelconque des revendications précédentes, **caractérisé en ce que** les moyens d'entraînement (18, 19, 20) comprennent au moins une mâchoire d'entraînement (20) qui est latéralement mobile contre le tuyau (15).

10. Appareil ménager selon la revendication 9, sachant que les moyens d'entraînement (18, 19, 20) comprennent deux mâchoires d'entraînement (20) entre lesquelles est agencé le tuyau (15).

11. Appareil ménager selon l'une quelconque des revendications 9 ou 10, sachant que la mâchoire d'entraînement ou les mâchoires d'entraînement (20) est ou sont couplée(s) avec un entraînement (18) et peut ou peuvent être déplacée(s) par celui-ci.

12. Appareil ménager selon l'une quelconque des revendications précédentes, **caractérisé en ce que** l'appareil ménager est réalisé sous forme de lave-vaisselle et présente au moins un premier et un deuxième bras gicleur (3a, 3b), tel qu'un ratio de la quantité d'eau à amener aux deux bras gicleurs (3a, 3b) peut être modifié avec le dispositif de distribution (6).
